# EUROPEAN PATENT APPLICATION

(11) **EP 2 913 943 A1**
(43) Date of publication of application: **02.09.2015**
(21) Application number: 14305289.2
(22) Date of filing: 28.02.2014
(51) Int. Cl.: H04B 10/2581, H04J 14/02, H04J 14/04

(54) **Optical communication with spatially multiplexed optical packet signals**

(71) Applicant: ALCATEL LUCENT, 92100 Boulogne-Billancourt (FR)
(72) Inventor: De Valicourt, Guilhem, 91620 Nozay (FR); Lamponi, Marco, 75014 Paris (FR); Le Liepvre, Alban, 91460 Marcoussis (FR)
(74) Representative: Loyer & Abello

(57) **Abstract**

An optical switching node (2) in a multi-core fiber (4) network, comprising:
- an input section for receiving spatially multiplexed optical signals, each optical signal comprising wavelengths multiplexed optical packets,
- a controller (13) adapted to receive the control data of each wavelength multiplexed optical packets,
- an output section for transmitting spatially multiplexed optical signals in a second multi-core optical fiber,
- an optical transit section adapted to selectively pass optical packets from the input section to the output section, wherein the optical transit section comprises:
- a spatial demultiplexing section,
- an optical gate (14);
- a spatial multiplexing section (15), the optical gate being adapted for receiving at least one optical packet (18) of one of the wavelength multiplexed optical packets, and
wherein the controller is adapted to configure the optical gate in one of a blocking state and a passing state as α function of the control data.

## Description

### Field of the invention

The invention relates to the technical field of optical communication systems employing a packet granularity.

### Background

Optical communication networks employing Spatial Division Multiplexing (SDM) provide flexibility, high capacity and efficient use of a single optical fiber having a plurality of cores. In a multi-core optical fiber, data is sent along different cores inside the same optical fiber. It is necessary to maintain the optical signals along the optical fiber. Consequently, optical amplifiers able to handling all the cores of the multi-core optical fiber at once could be inserted periodically. However the performances of such amplifiers are limited in terms of gain and noise and also in terms of functionality and footprint.

The transmission in a multi-core optical fiber of wavelength multiplexed optical signals is a breakthrough option allowing higher capacity, higher efficiency and lower energy consumption network (or datacenter).

### Summary

In an embodiment, the invention provides an optical packet switching node for a Spatial Division Multiplexing optical network operating with a grid of optical frequencies, comprising:
- an input section connectable to a first multi-core fiber for receiving a plurality of spatially multiplexed optical signals from a plurality of cores of the first multi-core fiber, each optical signal comprising a plurality of time-sequential optical packets, each optical packet comprising an optical packet header carried on a control wavelength channel and an optical packet payload carried by at least one payload wavelength channel belonging to the grid, wherein the optical packet header comprises control data and the optical packet payload comprises digital data to be transmitted,
- a controller adapted to receive the control data of each packet header,
- an output section connectable to a second multi-core fiber for transmitting spatially multiplexed optical signals in the second multi-core optical fiber,
- a spatial demultiplexing section connected to the input section for receiving the plurality of spatially multiplexed optical signals and arranged for separating each of the optical signals as a function of the core of the first multi-core optical fiber from which the optical signal has been received,
- a spatial multiplexing section having a plurality of inputs and an output, the output of the spatial multiplexing section being connected to the output section of the node, said spatial multiplexing section being adapted for spatially multiplexing a plurality of optical signals received at the inputs of the spatial multiplexing section,
- a plurality of optical transit paths each arranged between an output of the spatial demultiplexing section and an input of the spatial multiplexing section and adapted to selectively send a respective optical signal from the input section to the output section, wherein at least one of the optical transit paths comprises an optical gate, the optical gate being switchable to selectively pass or block the payload of an individual optical packet of the optical signal sent on the at least one transit path,
wherein the controller is adapted to configure the optical gate in one of the blocking state and the passing state as a function of the control data of the header of individual optical packet.

In embodiments, such an optical packet switching node may further comprise one or more of the following features.

In an embodiment, the optical packets are multi-wavelength optical packets, wherein a multi-wavelength optical packet comprises the optical packet header and the optical packet payload, wherein the optical packet payload comprises a plurality of time-synchronous payload sections carried by a group of payload wavelength channels belonging to the grid, and wherein the optical gate receives all payload sections of the optical packet and wherein the controller is adapted to configure the optical gate in one of the blocking state and passing state as function of the control data of the optical packet header.

In an embodiment, the optical packet payload of an optical packet is carried by a single payload wavelength channel and the optical signal received from a core of the multi-core fiber is a Wavelength Division Multiplexed signal comprising a plurality of the pluralities of time-sequential optical packets, the payloads of each plurality of time-sequential optical packets are carried by a respective payload wavelength channel of the grid, each transit paths of the optical packet switching node further com prises:
- a wavelength demultiplexer arranged between the spatial demultiplexer and the optical gate for separation of the optical packet payloads as a function of the payload wavelength channels,
- a wavelength multiplexer arranged between the optical gate and the spatial multiplexing section, and
- a plurality of optical gates each arranged between a respective output of the wavelength demultiplexer and a respective intput of the wavelength multiplexer for selectively passing or blocking the payload of an individual optical packet,
the controller being adapted to configure each optical gate in one of the blocking state and passing state as function of the control data of the optical packet headers.

In an embodiment, the wavelength demultiplexer and/or the wavelength multiplexer is a cyclic arrayed waveguide grating.

In an embodiment, the optical packet switching node further comprises an optical packet adding section connected to an optical transit path between the optical gate and the spatial multiplexing section and adapted to insert an optical packet in the transit path when the optical gate is in a blocking state.

In an embodiment, the optical packet adding section comprises a plurality of modulated optical transmitters each operating on a respective wavelength channel for generating a plurality of optical packet payloads or optical packet payload sections in a time-synchronous manner.

In an embodiment, the optical packet adding section further comprises an optical combiner for wavelength multiplexing in a time-synchronous manner the generated optical packet payload sections, the optical combiner having an output connected to the optical transit path.

In an embodiment, each optical transit path further comprises an optical coupler located between the optical gate and the wavelength multiplexer, the coupler being connected to a respective one of the optical transmitters for inserting at least one generated optical packet payload in the optical transit path.

In an embodiment:
- the spatial demultiplexing section comprises an array of equally spaced first passive silicon-on-insulator waveguides, each first passive waveguide comprising a grating coupler, for instance a 1-D grating coupler or a 2-D grating coupler, facing one corresponding core of the first multi-core fiber to couple the optical signal carried on the core of the first multi-core fiber with the corresponding first passive waveguide,
- the spatial multiplexing section comprises an array of equally-spaced second passive silicon-on-insulator waveguides, each second passive waveguide comprising a grating coupler, for instance an 1-D grating coupler or a 2-D grating coupler, facing one corresponding core of the second multi-core fiber to couple the signal carried on the second passive waveguide with the corresponding core of the second multi-core fiber, and
- each optical transit path is connected on one side to a respective one of the first passive waveguides and on the other side to a respective one of the second passive waveguides, the optical gate including an hybrid III-V on silicon optical amplifier.

In an embodiment:
- a plurality of third passive optical waveguides connect the optical gates to the optical outputs of the wavelength demultiplexer and a plurality of fourth passive waveguides connect the optical gates to the optical inputs of the wavelength multiplexer, each optical gate being an hybrid III-V on silicon optical amplifier, and
- the wavelength demultiplexer is a Silicon-On-Insulator Arrayed Waveguide Grating located on the first passive waveguide, and
- the wavelength multiplexer is a Silicon-On-Insulator Arrayed Waveguide Grating located on the second passive waveguide.

In an embodiment,
- the spatial demultiplexing section comprises a plurality of 2-D grating couplers, each 2-D grating coupler of the spatial demultiplexing section faces a corresponding core of the first multi-core fiber, each 2-D grating coupler of the spatial demultiplexing section is connected to two optical paths to couple the two polarization components of each optical signal carried on the core of the first multi-core fiber with a corresponding optical path, and
- the spatial multiplexing section comprises a plurality of 2-D grating couplers, each 2-D grating coupler of the spatial multiplexing section faces a corresponding core of the second multi-core fiber, each 2-D grating coupler of the spatial multiplexing section is connected to two optical paths carrying each one a respective polarization component of an optical signal to couple the two polarization components of the optical signals with the corresponding cores of the second multi-core fiber.

In an embodiment, the optical transit path including the optical gate further includes a coupler for sending the control wavelength channel of the optical signal to the controller.

In an embodiment, the invention also provides a method of operating an optical packet switching node as described here above for transmitting digital data in a Spatial Division Multiplexing optical network operating with a grid of optical frequencies in a multi-core fiber, comprising:
- at a first network node, generating a first optical signal including a plurality of time sequential optical packets, each optical packet comprising a packet header carried by a control wavelength channel and an optical packet payload carried on at least one payload wavelength channel belonging to the grid, wherein the packet header comprises control data and the payload comprises digital data to be transmitted, and
- Spatially Multiplexing the first optical signal with other optical signals and sending the multiplexed optical signals on a multi-core fiber,
- at a second network node, the second node being connected to the multi-core fiber, spatially demultiplexing the plurality of optical signals sent on the multi-core fiber and sending each optical signal carried on a single core of the multi-core fiber on a corresponding optical transit path,
- sending the optical packet header of an optical packet of the first optical signal to a controller adapted to receive the control wavelength channel,
wherein at least one optical transit path on which is sent an optical packet payload of the optical packet includes an optical gate, the method further comprising configuring the optical gate in one of a blocking state and a passing state as a function of the control data of the packet header of the optical packet.

In an embodiment:
- at the first node, the generation of the first optical signal comprises the generation of multi-wavelength optical packets,
- at the second node, the method further comprises sending all payload sections of a multi-wavelength optical packet of the first optical signal on the optical transit path including the optical gate,
and configuring the optical gate includes configuring the optical gate in one of a blocking state in order to block all the payload sections of the mutli-wavelength optical packet and a passing state in order to transfer all the payload sections of the mutli-wavelength optical packet to the spatial multiplexer section.

In an embodiment, the method further includes:
- wavelength demultiplexing the first optical signal in a plurality of pluralities of time-sequential optical packets, wherein each plurality of time-sequential optical packets comprises payloads carried on a single payload wavelength channel,
- sending the payloads of the time-sequential optical packets on a dedicated optical transit path comprising an optical gate, and
- configuring the optical gate in one of a blocking state and a passing state according to the packet headers of the optical packets.

In an embodiment, the method further includes:
- generating an optical packet,
- inserting the generated optical packet in the optical transit path including the optical gate configured in a blocking state, the generated optical packet being inserted between the optical gate and the spatial multiplexer.

In an embodiment, the method further includes inserting a single optical packet in a waveguide linking the optical gate to the wavelength multiplexer, inserted optical packet being wavelength multiplexed with the single optical packets passed through the optical gate to the wavelength multiplexer.

In an embodiment, the method further includes, at the second node, sending the whole first signal to the optical gate.

In an embodiment, the method further includes, at the second node, inserting a wavelength multiplexed optical packets in a waveguide linking the optical gate to the spatial multiplexer, inserted wavelength multiplexed optical packets being spatially multiplexed with the wavelength multiplexed optical packets passed through the optical gate to the spatial multiplexer.

Aspects of the invention are based on the idea of providing an architecture having amplification and switching functions performed separately for the different cores of a multi-core fiber transmission line by the same device. Aspects of the invention are based on the idea of providing a solution to reduce the footprint of such devices for applications like datacenter.

An idea of the invention is to propose an optical node with a low-cost integrated multi-core optical amplifier device. Another aspect of the invention is to provide such an optical amplifier which can be used in a Wavelength Division Multiplexing packet-switched network. An idea of the invention is to allow individual control of each core for distributed equalization. An idea of the invention is to allow individual control of each wavelength of the wavelength multiplexed optical packets for distributed equalization. An idea of the invention is to allow individual control of each optical packet of the wavelength multiplexed optical packets for distributed equalization.

### Brief description of the drawings

These and other aspects of the invention will be apparent from and elucidated with reference to the embodiments described hereinafter, by way of example, with reference to the drawings.
Figure 1 is a functional representation of an optical ring network in which embodiments of the invention can be used;
Figure 2 is a functional representation of an optical switching node having a processor for processing control data in the network of Figure 1;
Figure 3 is a functional representation of an optical switching node in accordance with a first embodiment showing the treatment of the optical packets in said first embodiment;
Figure 4 is a schematic representation of the three parts of an integrated optical chip which can be used into the optical switching node of figure 3;
Figure 5 illustrates a structural representation of a spatial demultiplexer adapted to couple each core of multi-core fiber to a respective first waveguide;
Figure 6 illustrates an example of mask layout suitable for implementing the node of figure 3;
Figures 7 and 8 are representations of an optical switching node in accordance with the first embodiment having an adding section.
Figure 9 is a functional representation of an optical switching node in accordance with a second embodiment including a spatial and a wavelength multiplexing stages.
Figure 10 illustrates an optical switching node in accordance with the second embodiment including an add section able to insert optical packets on a single modulated wavelength.
Figure 11 is a representation of the optical switching node in another embodiment suitable for transmissions with polarization multiplexing.

### Detailed description of the embodiments

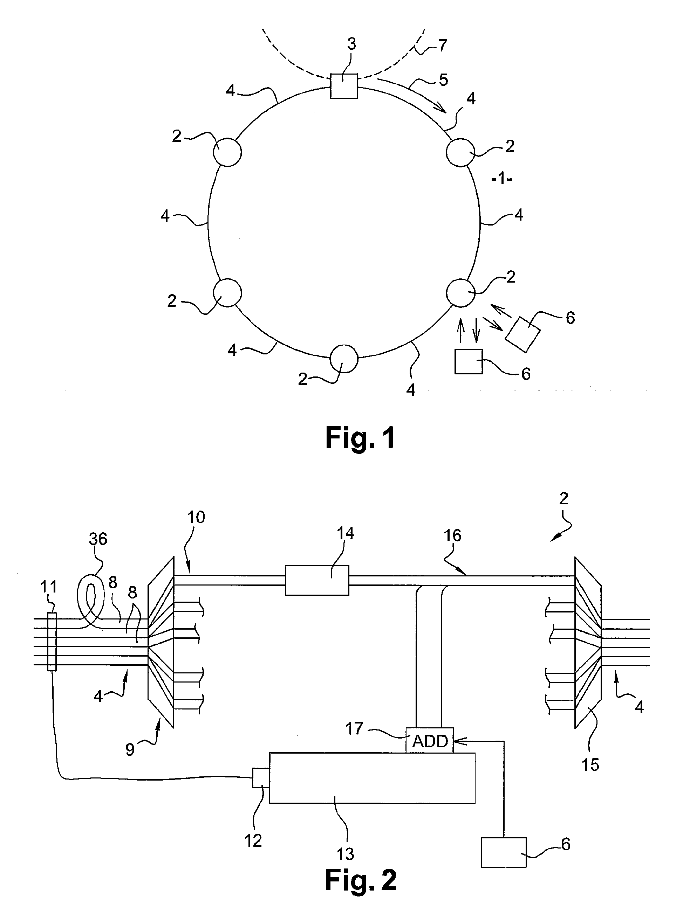

With reference to Figure 1, an optical ring network 1, which can be used in a metropolitan or access segment, comprises Optical Switching Nodes 2, hereafter named OSN 2, and a hub node 3 connected by optical links 4, e.g. optical fibers having a plurality of cores. Arrow 5 shows a direction of propagation of the optical packets containing data being transfered on the network 1. Alternatively, the ring could be bidirectional. Each OSN 2 cooperates with client devices, depicted at numbers 6. The client devices 6 provide the OSN 2 with data to insert into the optical network 1 and recovers data extracted from the optical network 1 by the OSN 2. Many elements other than those depicted may be involved in the construction of the network 1, for example redundant links to protect against breakdowns, a network management system, etc.

The hub node 3 is a different type of node which converts to electronic all the incoming optical packets on the one side, and fills all slots on all the cores of the multi-core optical fiber 4 with light, i.e. wavelength multiplexed optical packets being either data packets or dummy packets, on the other side. The hub node 3 can interface with another network 7 in a known manner. A dummy packet is an optical packet with no meaningful content that is used for physical layer-related purposes, namely keeping power received by the optical amplifiers roughly constant over time. In another embodiment, the optical network operates without any hub node 3. In an embodiment, Burst mode Erbium Doped Fiber Amplifier (EDFA) are used to manage signals comprising empty slots, i.e. having signal power variation over time.

The network 1 is preferably designed so that any OSN 2 can communicate with all the others in the optical domain, which is to say that the network 1 can transparently transport a data packet from the transmitter node to the receiver node. To do so, the OSN 2 has a transparent transit section. Preferably, an OSN 2 is able to block or transmit data packets from a multi-core optical fiber to another multi-core optical fiber. The bandwidth used for traffic intended to this OSN 2 may then be allocated flexibly within a wide range as needed. Preferably, an OSN 2 is able to insert data packets on a multi-core optical fiber. The added data might thereby be selected depending upon the load on the cores of the multi-core optical fiber.

Figure 2 shows a functional representation of an OSN 2 having a controller for processing control data which can be used in the network of Figure 1.

In a multi-core fiber 4, each core 8 of the multi-core fiber 4 carries an optical signal. In order to ensure high capacity and efficient use of a single core 8 of the multi-core fiber 4, the optical signal carried on each core 8 is a wavelength multiplexed optical signal, i.e. each optical signal comprises a plurality of wavelength channels in the same optical signal. Such a wavelength multiplexed optical signal is hereafter named a WDM signal.

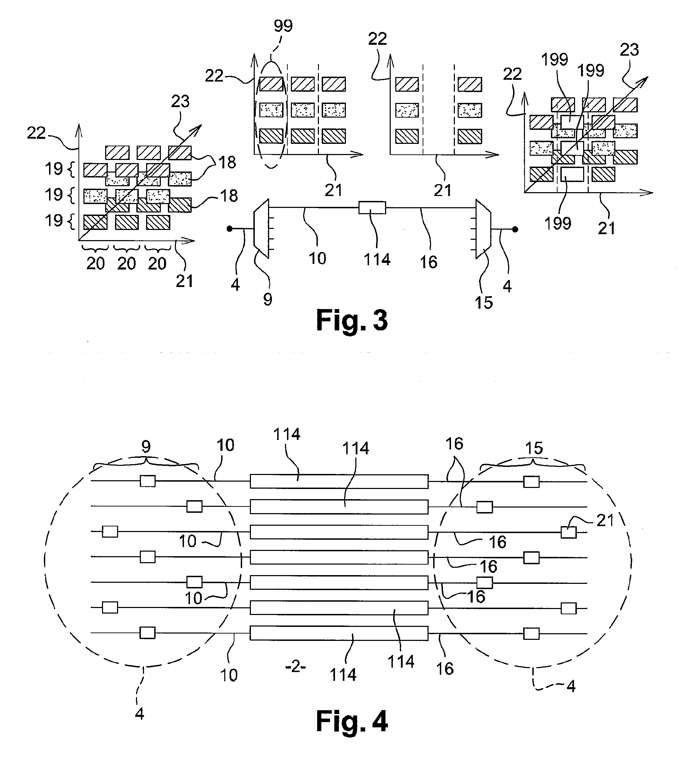

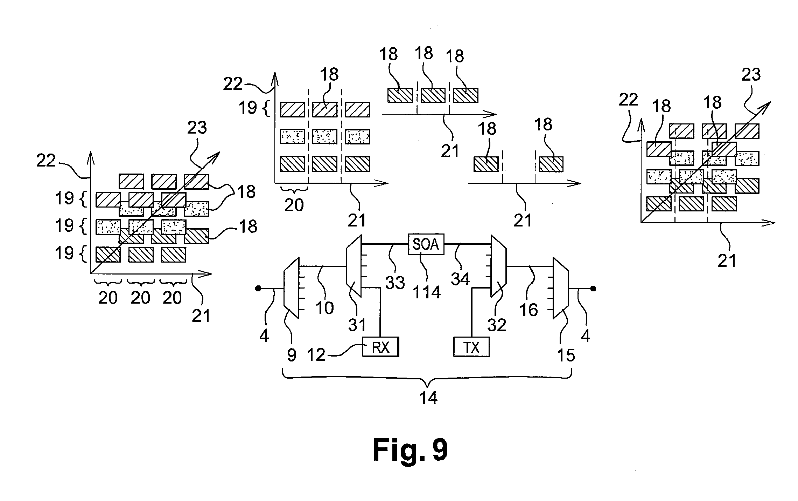

Two embodiments will be considered for the implementation of the optical packets. In a first embodiment depicted on figure 3 to 8, each packet is multi-wavelength optical packets. In a second embodiment, depicted in figure 9 to 10, each packet is a single wavelength packet having a payload on a single wavelength channel.

The OSN 2 can let traffic pass transparently through the OSN 2, without a conversion to the electrical domain. Moreover, the OSN 2 can insert or add traffic on any wavelength, for instance thanks to one or more fast tunable lasers, and can receive or drop traffic on specific wavelengths for instance thanks to reconfigurable burst-mode receivers.

A WDM signal comprises an optical packet header and a payload. The optical packet header comprises control data. The control data includes routing information e.g., the destination of the payload data. The control data may include further information such as format information e.g., the client protocol being encapsulated.

At the OSN 2 input, the optical signal transported by the multi-core optical fiber 4 is received and introduced into a splitter section 9. The splitter section 9 spatially demultiplexes, i.e. separates, the optical signal received from the input multi-core optical fiber 4 into a plurality of WDM signals. The splitter section 9 has an output separately supplying a plurality of first waveguides 10 with the WDM signals splited from the input multi-core optical fiber 4.

For the sake of clarity, only one first waveguide 10 carrying a single WDM signal is represented on figure 2, however it will be appreciated that the device and functions described below in reference to the single WDM signal described may be implemented in the same manner for a plurality of WDM signals carried by a plurality of first waveguides 10 and spatially splited from the splitter section 9 receiving said plurality of WDM signals from the input multi-core optical fiber 4.

An optical coupler 11 directs the optical packet headers of the WDM signals, i.e. deflects the control wavelength channels reserved for signaling in the WDM signals. The coupler comprises an output for each WDM signal. Each output of the optical coupler 11 is linked to an optical packet receiver 12 of an electronic controller 13. The optical coupler directs the whole WDM signals through a wavelength filter, not shown, which only let pass the control wavelength channels. Such an optical coupler 11 may be located at the OSN 2 input, on the multi-core optical fiber 4 connected to the splitter section 9. The OSN 2 may include a fiber delay loop 36 (illustrated for only one core for the sake of simplicity) to delay the signals during the controller analyzes of the optical packet headers. This fiber delay loop 36 provides time to the controller to configure the optical gates according to the optical packet headers.

The first waveguide 10 carrying the WDM signal is linked to a selective transit section 14. The optical packets of the WDM signal are transmitted by the first waveguide 10 from the output of the splitter section 9 to the selective transit section 14. The controller 13 analyzes the optical packet header and, according to the control data analyzed, sends instructions to the selective transit section 14. According to the instructions received by the selective transit section 14 from the controller 13, the selective transit section 14 blocks or let pass the optical packets of the WDM signal. Typically, the controller's instructions configure the selective transit section 14 in one of a blocking state and a passing state at each time-slot as a function of the control data of the packet header of the WDM signal.

The selective transit section 14 is linked to a spatial multiplexer section 15 by a second waveguide 16 made of a single core optical fiber or integrated waveguide. The Spatial multiplexer section 15 spatially combines the WDM signals received from the second waveguides 16. An optical signal comprising all the spatially multiplexed WDM signals is then transmitted on the network 1 from an output of the spatial multiplexer section 15 to the second multi-core optical fiber.

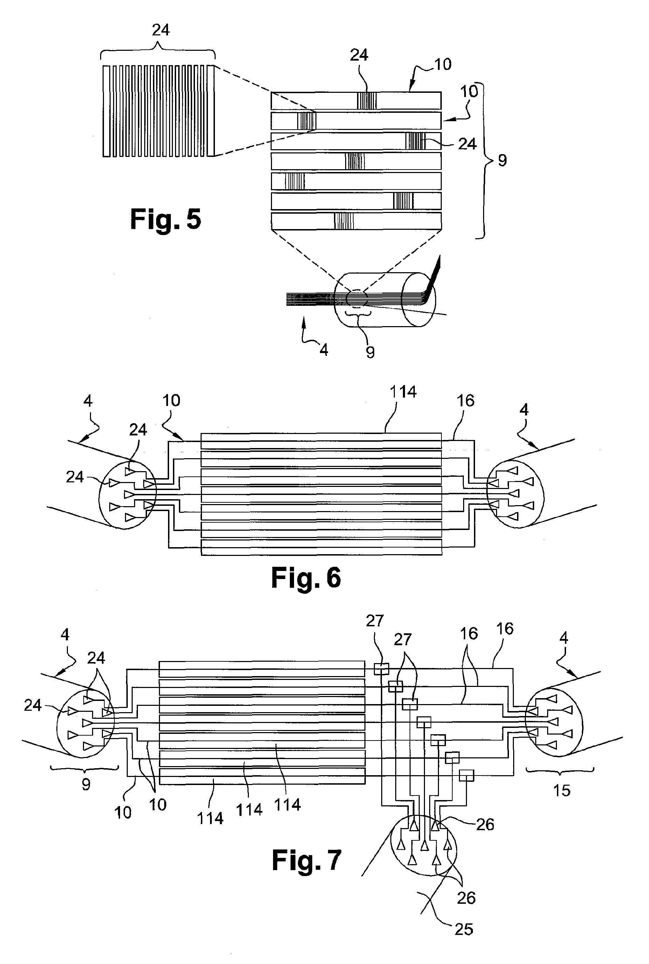

In an embodiment, a packet which has been blocked by the selective transit section 14 at a given time-slot can be replaced by inserting another packet in the second waveguide 16. The added packet may include data from clients 6 locally connected to the OSN 2 and which have to transmit said data to other clients 6 in the network 1. In this embodiment, the OSN 2 includes an add section 17. Embodiment of such an add section 17 will be described in detail here after in view of figures 7, 8 and 10. The add section 17 receives data from the clients 6 and generates optical packets on multiple wavelength channels. The generated WDM signal is inserted in the second waveguide 16 towards the multiplexer section 15. Thus, the spatial multiplexer 15 spatially multiplexes both the transit traffic received from the splitter section 9, eventually passed through other selective transit sections 14, and the added traffic generated by the add section 17.

The figure 3 is a functional representation of an OSN 2 showing the treatment of an optical packet in the OSN 2 in accordance with the first embodiment.

The ring network 1 is a time-slotted network where data is transmitted within fixed-duration optical packet sections 18 over the network 1. Packets payload sections are carried on a plurality of wavelength channels 19 of a regular frequency grid, e.g. a standard ITU frequency grid. Packet payload sections 18 are transmitted synchronously over all wavelength channels 19. For each slot 20, the optical packet header of the multi-wavelength packet is transmitted over a separate wavelength channel called control channel λc, whereas all optical packet payload sections of the multi-wavelength packets 99 are transmitted during that slot 20 on the data channels. Hence, data channels carry the optical packet payload while the control channel λc carries the optical packet header of the optical packet.

In figure 3, every illustrated block corresponds to a single payload section 18. A first axis 21 of the graphs represents the time. A second axis 22 of the graphs represents the wavelengths. A third axis 23 of the graphs represents the spatial dimension of the multi-core optical fiber 4.

The first graph, starting from the left of the figure 3, represents an optical signal carried by a multi-core optical fiber 4 when said optical signal arrives in an input of the OSN 2. For the sake of clarity, figure 3 only shows an optical signal including two WDM signals carried by two cores 8 of the multi-core optical fiber 4. For the sake of simplicity, each WDM signal is a single sequence of multi-wavelength optical packets having three payload sections being carried on three wavelengths during each timeslot. However, it will be understood that the number of cores 8 of the multi-core optical fiber 4 and/or the number of wavelengths of the multi-wavelength packet could be more, or less, important.

At the input of the OSN2, the splitter section 9, i.e. the spatial demultiplexer, separates the WDM signals from the different cores 8 of the multi-core optical fiber 4. For the sake of clarity, only one WDM signal carried by a single first waveguide 10 and the corresponding second waveguide 16 is represented respectively in the second and the third graphs starting from the left of the figure 3. However, it will be understood that the description hereafter is applicable for any number of WDM signals transmitted from the splitter section 9 to the multiplexer section 15.

The second graph, starting from the left of the figure 3, represents the single sequence of multi-wavelength optical packets resulting from the passage of the optical signal of graph 1 in the splitter section 9. The payload of one optical packet 99 is still carried on three wavelengths. This sequence of packets is carried by a single and independent first waveguide 10. The whole WDM signal is send from the splitter section 9 to an optical gate 114 on this first waveguide 10. Consequently, according to the control data of the optical packet header, the whole optical packet payloads is blocked or amplified by optical gate 114 during each timeslot.

When a sequence of packets does not contain any optical packet on a given timeslot, the optical gate 114 remains in a blocking state at this time-slot. This arrangement makes it possible to limit the propagation of optical background noise that may exist in this part of the spectrum and in this timeslot, due, for example, to active optical components along the line upstream of the OSN 2 or in the OSN 2, especially EDFA amplifiers.

As shown on the third graph, starting from the left of the figure 3, the sequence of optical packets has been amended after its passage in the optical gate 114. More specifically, the optical gate 114 has let pass the multi-wavelength optical packet of the first and the third timeslot, however, the multi-wavelength optical packet of the second timeslot has been blocked by the optical gate 114. As the multi-wavelength optical packet of the second timeslot has been blocked, the WDM spectrum is free during this second timeslot for inserting a new multi-wavelength optical packet.

As shown on the last graph, starting from the left of the figure 3, all the WDM signals carried by the second waveguides 16 of the OSN 2 have been spatially multiplexed in the second multi-core optical fiber 4. In this last graph, the added multi-wavelength packet 199 is shown in the front in the second timeslot of the first WDM signal.

The figure 4 shows a schematic representation of the three parts of an integrated optical chip which can be used to implement the optical gate of figure 3. The splitter section 9 couples each core 8 of the input multi-core fiber 4 into a passive silicon-on-insulator waveguide 10 on the chip. The optical gate 114 is an active part, to amplify, let pass or block independently the WDM signals carried by the different waveguides 10. Such an optical gate 114 may be a variable optical attenuator or a Mach-Zehnder Modulator or any other adapted device. The Spatial multiplexer section 15, corresponding to the output part of the OSN 2, couples the WDM signals from all the second passive waveguide 16 of the integrated chip to the second multi-core optical fiber 4. Each optical gate 114 is for instance an hybrid III-V on silicon Semiconductor Optical Array (SOA).

Figure 5 is a structural representation of the spliter section 9 of figure 4. Optical waveguides 10 of the chip include an array of equally spaced 1-D grating couplers 24. Each 1-D grating coupler 24 is longitudinally located in a respective waveguide 10 facing a respective core of the multi-core fiber to couple the light from the core 8 of the input multi-core optical fiber 4 to the waveguide 10.

The spatial multiplexer section 15 is made with the same components as the splitter section 9, though arranged in the reverse order and direction, as represented in Figure 6.

In a symmetric way the amplified optical signals are coupled from each SOA 114 to a passive waveguide 16, and from the passive waveguide 16 into the output multi-core optical fiber 4. An example of potential mask layout for etching the integrated chip is presented in figure 6.

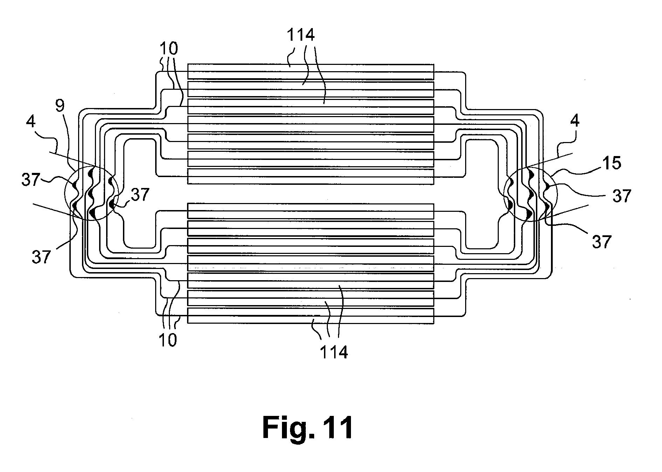

Figure 11 is a representation of the OSN 2 in another embodiment suitable for transmissions with polarization multiplexing. In this embodiment, the splitter section includes a plurality of 2-D couplers 37. Each 2-D coupler 37 is located facing a respective core of the input multi-core fiber 4. Each 2-D coupler 37 separates the two polarization components of the signal carried on a corresponding core 8 of the input multi-core optical fiber 4. Each polarization component is then coupled with a respective waveguide 10 to pass through a corresponding optical gate 114.

The spatial multiplexer section 15 is made with the same components as the splitter section 9, though arranged in the reverse order and direction. Thus, the two separated signals corresponding to the two polarization components of each signal in the input multi-core fiber are combined by the multiplexer section 15 in a single core of the output multi-core fiber.

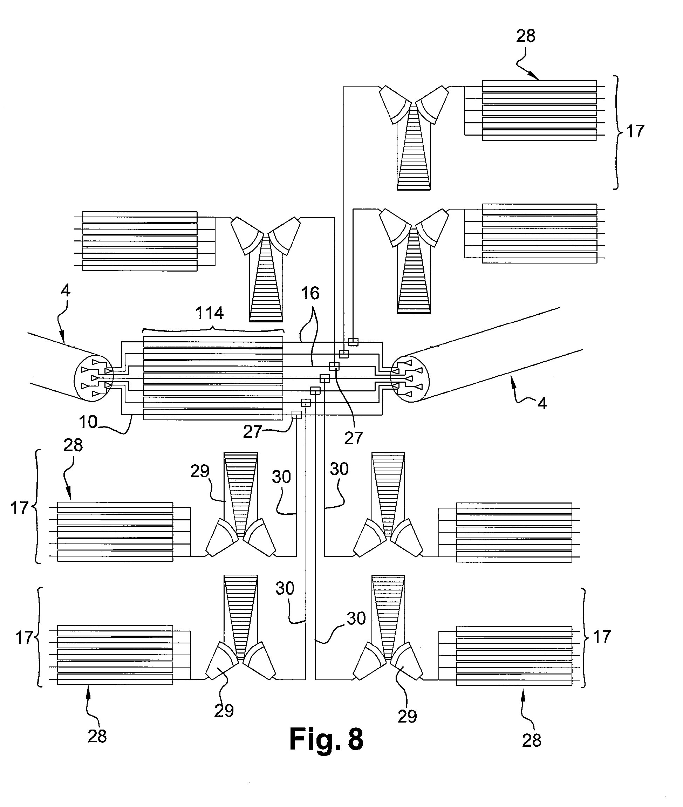

Figure 7 and figure 8 are structural representations of an OSN 2 in accordance with the first embodiment having an add section 17.

When wavelength multiplexed optical packets are blocked by the selective transit section 14, it is advantageous to insert new optical packets in the free time slot over all wavelengths. The insertion could be done from an external source as presented in figure 7, or from an integrated source as illustrated in figure 8.

In figure 7, an external multi-core optical fiber 25 carries an optical signal including a plurality of WDM signals, each WDM signal being carried by a single core of the external multi-core optical fiber 25. 1-D grating couplers 26 in the second waveguides 16 are located facing each core of the external multi-core fiber to vertically couple each WDM signal of the external multi-core optical fiber 25 with the plurality of second waveguides 16 linking the output of each optical gate 114 to the spatial multiplexer section 15. Optical couplers 27 are used to mix the multi-wavelength optical packets inserted in the plurality of second waveguides 16 from the external multi-core optical fiber 25 with the multi-wavelength optical packets transmitted from the outputs of the optical gates 114.

Figure 8 illustrates an integrated version of the add section 17. In the embodiment illustrated in figure 8, a laser array is integrated into the same chip as the optical gates 14.

In this embodiment, the inserted WDM signals are generated on the chip. The add section comprises a plurality of optical packet transmitters 28 which are integrated into PICs. These packet transmitters 28 are for instance lasers wherein each laser lases to the desired wavelength for generating the modulated optical packets of a WDM signal. The optical packet transmitters 28 send their optical signals into a wavelength multiplexer 29 that outputs the WDM signals into a third waveguide 30. The WDM signal generated by the wavelength multiplexer 29 is then inserted in the second waveguide 16 as described above. Such lasers may be lasers with integrated modulation transmitting in On/Off Keying modulation format or may be lasers coupled with an external modulator such as a Quadrature Phase-Shift Keying (QPSK) modulator or a M-ary Quadrature Amplitude Modulation (MQAM) modulator to send a signal to the wavelength multiplexer 29 in a complex modulation format.

A buffer is accessed by client devices 6 to write client data to be added into the optical network 1. A shift register operates to segment the client data into respective data segments to be carried each payload section of a generated multi-wavelength packet. Each optical packet transmitter 28 modulates one payload section of the multi-wavelength packet with the corresponding data segment provided by the shift register.

Preferably, the optical packet transmitters 28 use tunable optical sources with an internal or external modulator, which makes it possible to reach the entire spectrum of wavelength channels for inserting traffic independently of the number of transmitters used. In that case, tuning of the transmitters 28 is carried out under the control of the electronic layer in synchronization with the time windows available on the optical paths for packet transmission.

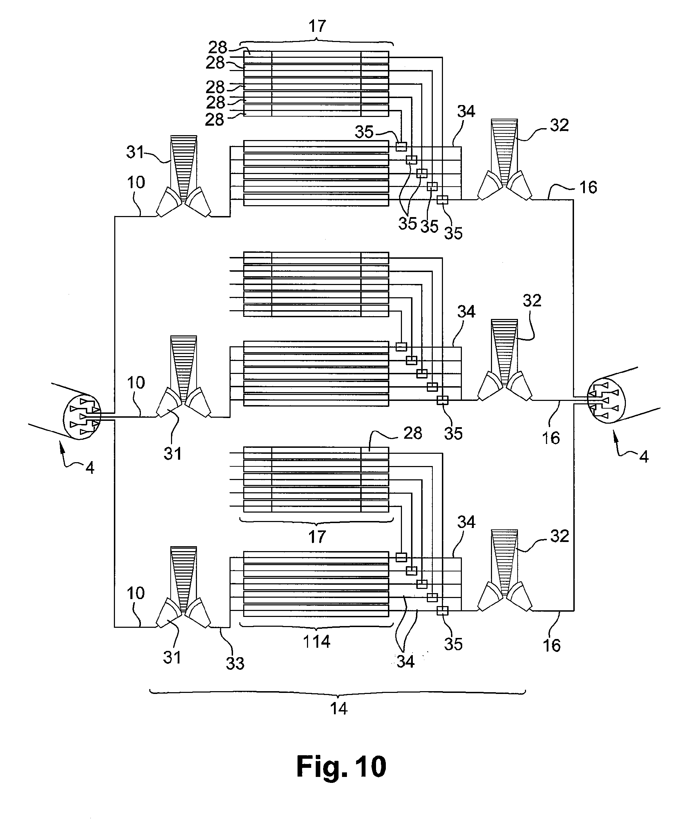

A second embodiment of the OSN 2 will now be described in reference to figures 9 and 10. In this embodiment, the payload of an optical packet is carried by a single wavelength channel. Accordingly, the selective transit section 14 now includes both a spatial and a wavelength multiplexing process.

In this embodiment, the OSN 2 includes, between the splitter section 9 and the spatial multiplexer section 15 as described above, a wavelength demultiplexer section 31 and a wavelength multiplexer section 32. The first waveguides 10 link each output of the splitter section 9 to the input of one corresponding wavelength demultiplexer section 31, i.e. each wavelength demultiplexer section 31 receives a WDM signal from the splitter section 9. For the sake of clarity, only one first waveguide linked to one wavelength demultiplexing section 31 is illustrated in figure 9. However it will be understood that any number of such combination of a first waveguide 10 and a demultiplexer section 31 could be made similarly. The wavelength demultiplexer section 31 and the wavelength multiplexer section 32 may be Silicon-On-Insulator Arrayed Waveguide Grating, ring resonators, an "echelle" grating or any other adapted device.

The wavelength demultiplexing section 31 demultiplexes the WDM signal received from the first waveguide 10 into a plurality optical signals corresponding each one to a single wavelength channel of the WDM signal carrying a sequence of optical packets 18. The wavelength demultiplexing section 31 has outputs separately supplying a plurality of fourth waveguides 33 with the optical packets demultiplexed from the first waveguide 10. For the sake of clarity, only one fourth waveguide 33 carrying a single optical signal, corresponding to a single sequence of optical packets 18 modulated on a single wavelength is represented on figure 9. However it will be appreciated that the device and functions described below in reference to the single optical signal described may be implemented in the same manner for a plurality of optical signals carried by a plurality of fourth waveguides 33 and wavelength demultiplexed from the wavelength demultiplexer section 31.

An optical receiver 12 is connected to an optical coupler for receiving the control wavelength channel λc as described in view of figure 2 to allow the controller to send instructions for the treatment of the corresponding payload in the selective transit section 14. Such an optical coupler may be located at the input of the OSN 2 as described in view of figure 2 or may be located between the splitter section 9 and the wavelength demultiplexer section 31.

In this embodiment, the optical gate 114 receives the optical packet modulated on a single wavelength from the fourth waveguide 33. Consequently, the optical gate 114 may let pass or block each optical packet according to the optical packet header.

The optical gate 114 is linked to the wavelength multiplexer section 32 using a fifth waveguide 34. The wavelength multiplexer section 32 combines the optical packets received from the fifth waveguide 34. A WDM signal comprising all the time synchronous optical packets is then transmitted on the second waveguide 16 to the spatial multiplexer section 15.

In this embodiment, the add section 17 shown on figure 10 is adapted to insert a single optical packet 18 in the fifth waveguide 34 corresponding to an optical packet which has been blocked by the optical gate 114.

The figure 9 also shows graphs similar to those of figure 3. The only difference is the wavelength granularity of the packet selection process. Namely, as each packet 18 is carried by a single wavelength, an independent optical gate 114 is provided for selectively passing or blocking an individual optical packet 18 on each waveguide 33.

In the embodiment illustrated in figure 9, an add section not shown may be adapted to insert a WDM signal in the second waveguide 16 or directly in waveguide 34 as represented in Figure 10, in an similar way to the add section 17 described in view of figures 7 or 8.

Figure 10 illustrates an add section 17 which inserts optical packets 18 in the fifth waveguide 34 of the OSN 2 of figure 9. In this embodiment the add section 17 comprises a plurality of optical packet transmitters 28 which are integrated into a PIC as in figure 8. Coupling device 35 such as optical couplers 35 or Multi-Mode Interferometer 35 (MMI) are used to mix the optical packets inserted in the plurality of fifth waveguide 34 from optical packet transmitters 28 with the optical packets transmitted from the outputs of the selective transit sections 14. The optical packets from the optical packet transmitters 28 are inserted when the optical packets from the outputs of the optical gate 114 were deleted. Each optical packet transmitter 28 lases on a defined wavelength corresponding to the wavelength accepted by the wavelength multiplexer section 32.

The optical data packets may have various formats, with a fixed or variable size. According to an embodiment, the network 1 is designed to be able to transport data packets with several modulation formats (for example OOK, BPSK, DQPSK, and others) and/or several modulation rates (for example 10 Gb/s, 40 Gb/s, 100 Gb/s, and others). In this case, the signaling for a packet preferably comprises information about the modulation format and/or rate, so that the switching decisions for the optical packet can be taken by the electronic layers in consideration of the properties of the packet, for example to direct the packet to a suitable optical receiver at the destination node for the packet.

Preferably, fixed-size time windows are used in roughly synchronous fashion on all wavelength channels, which simplifies synchronization among OSN 2 and reduces the quantity of information that must be exchanged to carry out this synchronization. In fact, in the case of synchronous transmission over all the wavelength channels, the nodes must simply recognize the start of the transmission timeslot. For example, the duration of the time window may be about 1 to 100 microseconds, advantageously close to 10 microseconds.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical packet switching node (2) for a Spatial Division Multiplexing optical network (1) operating with a grid of optical frequencies, comprising:
- an input section connectable to a first multi-core fiber (4) for receiving a plurality of spatially multiplexed optical signals from a plurality of cores (8) of the first multi-core fiber, each optical signal comprising a plurality of time-sequential optical packets, each optical packet comprising an optical packet header carried on a control wavelength channel and an optical packet payload carried by at least one payload wavelength channel belonging to the grid, wherein the optical packet header comprises control data and the optical packet payload comprises digital data to be transmitted,
- a controller (13) adapted to receive the control data of each packet header,
- an output section connectable to a second multi-core fiber (4) for transmitting spatially multiplexed optical signals in the second multi-core optical fiber,
- a spatial demultiplexing section (9) connected to the input section for receiving the plurality of spatially multiplexed optical signals and arranged for separating each of the optical signals as a function of the core of the first multi-core optical fiber from which the optical signal has been received,
- a spatial multiplexing section (15) having a plurality of inputs and an output, the output of the spatial multiplexing section being connected to the output section of the node, said spatial multiplexing section being adapted for spatially multiplexing a plurality of optical signals received at the inputs of the spatial multiplexing section,
- a plurality of optical transit paths each arranged between an output of the spatial demultiplexing section and an input of the spatial multiplexing section and adapted to selectively send a respective optical signal from the input section to the output section, wherein at least one of the optical transit paths comprises an optical gate (14), the optical gate being switchable to selectively pass or block the payload of an individual optical packet of the optical signal sent on the at least one transit path,
wherein the controller is adapted to configure the optical gate in one of the blocking state and the passing state as a function of the control data of the header of individual optical packet.

2. The optical packet switching node according to claim 1, wherein the optical packets are multi-wavelength optical packets, wherein a multi-wavelength optical packet comprises the optical packet header and the optical packet payload, wherein the optical packet payload comprises a plurality of time-synchronous payload sections carried by a group of payload wavelength channels belonging to the grid, and wherein the optical gate receives all payload sections of the optical packet and wherein the controller is adapted to configure the optical gate in one of the blocking state and passing state as function of the control data of the optical packet header.

3. The optical packet switching node according to claim 1, wherein the optical packet payload of an optical packet is carried by a single payload wavelength channel and wherein the optical signal received from a core of the multi-core fiber is a Wavelength Division Multiplexed signal comprising a plurality of the pluralities of time-sequential optical packets, wherein the payloads of each plurality of time-sequential optical packets are carried by a respective payload wavelength channel of the grid, wherein each transit paths of the optical packet switching node further comprises:
- a wavelength demultiplexer (31) arranged between the spatial demultiplexer and the optical gate for separation of the optical packet payloads as a function of the payload wavelength channels,
- a wavelength multiplexer (32) arranged between the optical gate and the spatial multiplexing section, and
- a plurality of optical gates each arranged between a respective output of the wavelength demultiplexer and a respective intput of the wavelength multiplexer for selectively passing or blocking the payload of an individual optical packet,
the controller being adapted to configure each optical gate in one of the blocking state and passing state as function of the control data of the optical packet headers.

4. The optical packet switching node according to claim 3, wherein the wavelength demultiplexer and/or the wavelength multiplexer is a cyclic arrayed waveguide grating.

5. The optical packet switching node according to anyone of claims 1 to 4, wherein the optical packet switching node further comprises an optical packet adding section (17) connected to an optical transit path between the optical gate and the spatial multiplexing section and adapted to insert an optical packet in the transit path when the optical gate is in a blocking state.

6. The optical packet switching node according to claim 5, wherein the optical packet adding section comprises a plurality of modulated optical transmitters each operating on a respective wavelength channel for generating a plurality of optical packet payloads or optical packet payload sections in a time-synchronous manner.

7. The optical packet switching node according to claim 6, wherein the optical packet adding section further comprises an optical combiner for wavelength multiplexing in a time-synchronous manner the generated optical packet payload sections, the optical combiner having an output connected to the optical transit path.

8. The optical packet switching node according to claim 6 taken in combination with claim 3 or 4, wherein each optical transit path further comprises an optical coupler located between the optical gate and the wavelength multiplexer, the coupler being connected to a respective one of the optical transmitters for inserting at least one generated optical packet payload in the optical transit path.

9. The optical packet switching node according to anyone of claims 1 to 8, wherein:
- the spatial demultiplexing section comprises an array of equally spaced first passive silicon-on-insulator waveguides, each first passive waveguide comprising a grating coupler facing one corresponding core of the first multi-core fiber to couple the optical signal carried on the core of the first multi-core fiber with the corresponding first passive waveguide,
- the spatial multiplexing section comprises an array of equally-spaced second passive silicon-on-insulator waveguides, each second passive waveguide comprising a grating coupler facing one corresponding core of the second multi-core fiber to couple the signal carried on the second passive waveguide with the corresponding core of the second multi-core fiber, and
- each optical transit path is connected on one side to a respective one of the first passive waveguides and on the other side to a respective one of the second passive waveguides, the optical gate including an hybrid III-V on silicon optical amplifier.

10. The optical packet switching node according to claim 9 combined to claim 3, wherein :
- a plurality of third passive optical waveguides connect the optical gates to the optical outputs of the wavelength demultiplexer and a plurality of fourth passive waveguides connect the optical gates to the optical inputs of the wavelength multiplexer, each optical gate being an hybrid III-V on silicon optical amplifier, and
- the wavelength demultiplexer is a Silicon-On-Insulator Arrayed Waveguide Grating located on the first passive waveguide, and
- the wavelength multiplexer is a Silicon-On-Insulator Arrayed Waveguide Grating located on the second passive waveguide.

11. The optical switching node according to any of claims 1 to 8, wherein
- the spatial demultiplexing section comprises a plurality of 2-D grating couplers, each 2-D grating coupler of the spatial demultiplexing section faces a corresponding core of the first multi-core fiber, each 2-D grating coupler of the spatial demultiplexing section is connected to two optical paths to couple the two polarization components of each optical signal carried on the core of the first multi-core fiber with a corresponding optical path, and
- the spatial multiplexing section comprises a plurality of 2-D grating couplers, each 2-D grating coupler of the spatial multiplexing section faces a corresponding core of the second multi-core fiber, each 2-D grating coupler of the spatial multiplexing section is connected to two optical paths carrying each one a respective polarization component of an optical signal to couple the two polarization components of the optical signals with the corresponding cores of the second multi-core fiber.

12. A method of operating an optical packet switching node according to one of the claims 1 to 10 for transmitting digital data in a Spatial Division Multiplexing optical network operating with a grid of optical frequencies in a multi-core fiber, comprising:
- at a first network node, generating a first optical signal including a plurality of time sequential optical packets, each optical packet comprising a packet header carried by a control wavelength channel and an optical packet payload carried on at least one payload wavelength channel belonging to the grid, wherein the packet header comprises control data and the payload comprises digital data to be transmitted, and
- Spatially Multiplexing the first optical signal with other optical signals and sending the multiplexed optical signals on a multi-core fiber,
- at a second network node, the second node being connected to the multi-core fiber, spatially demultiplexing the plurality of optical signals sent on the multi-core fiber and sending each optical signal carried on a single core of the multi-core fiber on a corresponding optical transit path,
- sending the optical packet header of an optical packet of the first optical signal to a controller adapted to receive the control wavelength channel,
wherein at least one optical transit path on which is sent an optical packet payload of the optical packet includes an optical gate, the method further comprising :
- configuring the optical gate in one of a blocking state and a passing state as a function of the control data of the packet header of the optical packet.

13. The method according to claim 12, wherein the second node is in accordance with claim 2:
- at the first node, the generation of the first optical signal comprises the generation of multi-wavelength optical packets,
- at the second node, the method further comprises sending all payload sections of a multi-wavelength optical packet of the first optical signal on the optical transit path including the optical gate,
and wherein configuring the optical gate includes configuring the optical gate in one of a blocking state in order to block all the payload sections of the mutli-wavelength optical packet and a passing state in order to transfer all the payload sections of the mutli-wavelength optical packet to the spatial multiplexer section.

14. A method according to any one of claims 12 to 13 wherein the second node is according to claim 3, the method further includes:
- wavelength demultiplexing the first optical signal in a plurality of pluralities of time-sequential optical packets, wherein each plurality of time-sequential optical packets comprises payloads carried on a single payload wavelength channel,
- sending the payloads of the time-sequential optical packets on a dedicated optical transit path comprising an optical gate, and
- configuring the optical gate in one of a blocking state and a passing state according to the packet headers, of the optical packets.

15. A method according to anyone of claims 12 to 14, the method further including :
- generating an optical packet,
- inserting the generated optical packet in the optical transit path including the optical gate configured in a blocking state, the generated optical packet being inserted between the optical gate and the spatial multiplexer.
